# EUROPÄISCHE PATENTSCHRIFT

(11) **EP 1 362 442 B1**
(45) Veröffentlichungstag und Bekanntmachung des Hinweises auf die Patenterteilung: **12.01.2005**
(21) Anmeldenummer: 02706632.3
(22) Anmeldetag: 28.01.2002
(51) Int. Cl.: H04J 3/06, H04J 3/24, H04L 29/06

(54) **JITTER-KORREKTUR BEI MULTIPLEXING**
JITTER CORRECTION DURING MULTIPLEXING
CORRECTION DE LA GIGUE LORS D'UN MULTIPLEXAGE

(30) Priorität: 22.02.2001 DE 10108551
(43) Veröffentlichungstag der Anmeldung: 19.11.2003
(73) Patentinhaber: SIEMENS AKTIENGESELLSCHAFT, 80333 München (DE)
(72) Erfinder: BELLING, Thomas, 81477 München (DE)
(86) Internationale Anmeldenummer: PCT/DE2002/000288
(87) Internationale Veröffentlichungsnummer: WO 2002/067476

(56) Entgegenhaltungen:
- EP-A- 0 895 378
- WO-A-00/72600
- DE-A- 19 813 551
- US-A- 5 596 581
- PATENT ABSTRACTS OF JAPAN vol. 1998, no. 14, 31. Dezember 1998 (1998-12-31) & JP 10 233806 A (MATSUSHITA ELECTRIC IND CO LTD), 2. September 1998 (1998-09-02)

## Beschreibung

Die Erfindung betrifft Verfahren und Vorrichtungen zum Übertragen von Nutzlastpaketen in einem paketvermittelten Datennetz.

Bei Übertragung von gemäß üblichen Mobilfunkstandards hocheffizient kodierten Sprach-Daten über ein Internetprotokoll - basiertes paketvermitteltes Datennetz unter Verwendung eines Standardprotokolls STACKS gemäss RTP/UDP/IP-Standards kann der kombinierte RTP/UDP/IP-Header in übermittelten Datenpaketen grösser als der Anteil an Nutzlast-Daten (payload) im Datenpaket sein. Wenn aus verschiedenen Paketströmen (beispielsweise unterschiedliche miteinander telefonierende Mobilfunkteilnehmer) mit Paketen unterschiedlicher Grösse und/oder Frequenz stammende Nutzlastpakete in einem Multiplexing-Verfahren in Muliplexpakete (=Sammelpakete) aufgenommen werden, in Multiplexpaketen übertragen werden und nach einer Übertragung das Datennetz von einer Demultiplexing-Einrichtung die Nutzlastpakete wieder dem Multiplexpaket entnommen werden, kann ein sogenannter Jitter entstehen, also eine Veränderung der zeitlichen Abstände der Nutzlastpakete relativ zueinander verglichen mit ihren zeitlichen Abständen relativ zueinander vor der Übertragung in einem Multiplexpaket.

Dieses Problem tritt insbesondere bei der Übertragung von Nutzlastpaketen für eine Mobilfunkkommunikation in den Vordergrund, da hier einige Verfahren zur Sprachkodierung mit variabler Bit-Rate arbeiten, da ferner bei einer Verbindung (beispielsweise zweier Mobilfunkteilnehmer) entlang eines Weges durch ein Datennetz mehrmals hintereinander ein oben angegebenes Multiplexing (Verpacken von Nutzlastpaketen in ein Sammelpaket) und Demultiplexing (und getrenntes Weiterverarbeiten/Weiterübermitteln von in einem Sammelpaket empfangenen Nutzlastpaketen in einem Demultiplexer) mehrmals hintereinander durchgeführt werden kann, so dass ein Ausgleich des dabei erzeugten Jitters durch eine Pufferung wegen der dadurch erzeugten Verzögerung und erforderlichen Puffergröße kaum geeignet realisierbar ist.

In der Schrift WO-A-0072600 ist ein Verfahren zur Gruppierung einer Vielzahl von Zeitstempeln in einem Zeitstempelpaket und die Übertragung des Zeitstempelpakets zusammen mit den Datenpaketen wobei eine eindeutige Zuordnung zwischen Zeitstempeldaten und den entsprechenden Datenpaketen festgestellt werden kann. Die Zeitinformationen des Zeitstempelnpakets stellen die Empfangszeiten der entsprechend ausgewählten Übertragungspakete dar.

Aufgabe der vorliegenden Erfindung ist es, möglichst flexibel und effizient bei der Übertragung von Nutzlastpaketen in einem paketvermittelten Datennetz, insbesondere RTP/UDP/IP - Datennetz, die zeitliche Verzögerung von in Multiplexpaketen (Sammelpaketen) über das Datennetz übertragenen Nutzlastpakete relativ zueinander unter geringer zeitlicher Verzögerung der Übermittlung aufrechtzuerhalten. Die Aufgabe wird jeweils durch die Gegenstände der unabhängigen Ansprüche gelöst.

Nutzlastpakete, welche auf ihrem Weg durch ein paketvermitteltes Datennetz mehrmals von einer Multiplex-Einrichtung in einem Multiplexpaket (=Sammelpaket) zusammengefasst, über einen Teil ihres Weges durch das paketvermittelte Datennetz in diesem Multiplexpaket übertragen und dem übertragenen Multiplexpaket zur einzelnen Weiterbehandlung (einzelne Weiterübertragung/Übertragung in einem anderen Multiplexpaket, Ausgabe aus dem Datennetz) entnommen werden, haben erfindungsgemäß auch nach Übertragung durch das Paketdatennetz relativ zueinander die gleiche zeitliche Verzögerung und insgesamt eine geringe Übertragungsverzögerung, so dass Jitter effizient vermieden wird. Ein Ausgleich von durch Multiplexing, Übertragen und Demultiplexing entstandenem Jitter nach jedem Übertragen von Nutzlastpaketen in einem Sammelpaket über eine Teilstrecke auf dem Weg durch das Datennetz durch Widerherstellung der zeitlichlichen Verzögung von Nutzlastpaketen relativ zueinander vor einer Weiterübermittlung (beispielsweise in neuverpackten Sammelpaketen/Multiplexpaketen) minimiert die Pufferung, da nach jeder Multiplexing- Übertragung von Nutzlastpaketen in einem Sammelpaket nur so viel Pufferung in einem Puffer (zum Widerherstellen der zeitlichen Verzögerung der Nutzlastpakete relativ zueinander) verwendet ist, wie zum Ausgleich des beim gemultiplexten Übertragen über diesen Teil des Weges erforderlichen Jitters wirklich benötigt wird.(Wenn entgegen der Erfindung hingegen nur am Ausgang eines paketvermittelten Datennetzes der Jitter ausgeglichen würde, wäre eine erheblich grössere Puffergrösse erforderlich und es entstünde eine erheblich grössere Pufferverzögerung der Nutzlastpakete, was sowohl bei Sprach- wie auch bei anderer Datenübertragung sehr unerwünscht ist).
Um die zeitliche Verzögerung von Nutzlastpaketen vor einer Zusammenfassung in ein Sammelpaket (Multiplexpaket) für die gemeinsame Übertragung über einen Teil des Weges durch das Paketdatennetz in diesem Sammelpaket für eine Demultiplex-Einrichtung am Ende dieses Teiles des Weges im Sammelpaket anzugeben, können in unterschiedlichtster Weise Zeitinformationen betreffend die relative zeitliche Verzögerung der Nutzlastpakete zueinander vor der Übertragung in diesem Sammelpaket (beispielsweise relative zeitliche Verzögerung der Nutzlastpakete beim Eingang beim das Sammelpaket herstellenden Multiplexer) im Sammelpaket mitübertragen werden (timestamps).
Wenn Multiplexing (Erstellen eines Sammelpaketes aus mehreren in diesem Sammelpaket gemeinsam über einen Teil des Weges durch das Datennetz zu übertragenden Nutzlastpaketen) kann beispielsweise für jedes Nutzlastpaket ein Zeitoffset (Zeitinformation) abgespeichert und mit übertragen werden, der angibt, wieviel Zeit zwischen dem Beginn des Aufbaus des Multiplexpaketes und dem Empfang oder der Erzeugung dieses Nutzlastpaketes beim Multiplexing vergangen ist und beim Demultiplexing für jedes Nutzlastpaket zu einer sich aus dem Zeitpunkt des Empfangens des Sammelpaketes (Multiplexpaketes) plus dem für das jeweilige Nutzlastpaket mitübertragenen Zeitoffset ergebenden Zeitpunkt weitergereicht oder interpretiert werden. Alternativ kann auch jeweils die Zeitspanne zwischen dem Empfang oder der Erzeugung eines Nutzlastpaketes (beim Multiplexing) und dem Abschicken des Multiplexpaketes als Zeitoffset (Zeitinformation) verwendet werden, wenn zusätzlich die gesamte Zeit zwischen dem Beginn des Aufbaus des Multiplexpaketes und dem Abschicken dieses Multiplexpaketes beim Empänger (Demultiplexeinrichtung etc.) bekannt ist oder dem Empfänger mit übermittelt wird. Ferner ist es möglich, Nutzlastpakete im Multiplexpaket entsprechend der Reihenfolge ihres Empfangs oder ihrer Entstehung (beim das Multiplexpaket erzeugende Multiplexer) abzuspeichern; wenn der Empfänger des Multiplexpaketes diese Abspeicherungsvorschrift kennt, muss er beim Demultiplexing zu einem gegebenen Zeitpunkt jeweils nur den Zeitoffset des als nächstes zu bearbeitenden Nutzlastpaketes beachten und muss mit der Bearbeitung eines Mulitplexpaketes erst fortfahren, wenn der entsprechende Zeitpunkt erreicht ist.

Weitere Merkmale und Vorteile der Erfindung ergeben sich aus der nachfolgenden Beschreibung eines Ausführungsbeispiels anhand der Zeichnung. Dabei zeigt
Fig. 1 schematisch eine erfindungsgemässe Übertragung von Nutzlastpaketen in Sammelpaketen.

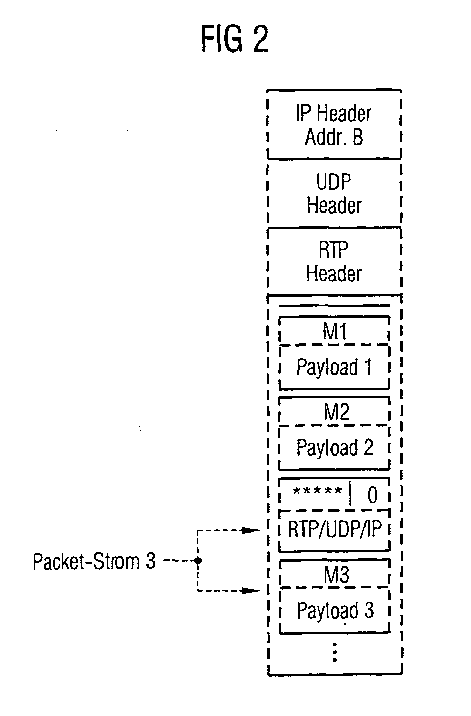

Fig.2 ein Multiplex-Paket umfassend mehrere gemultiplexte Nutzlastpakete.

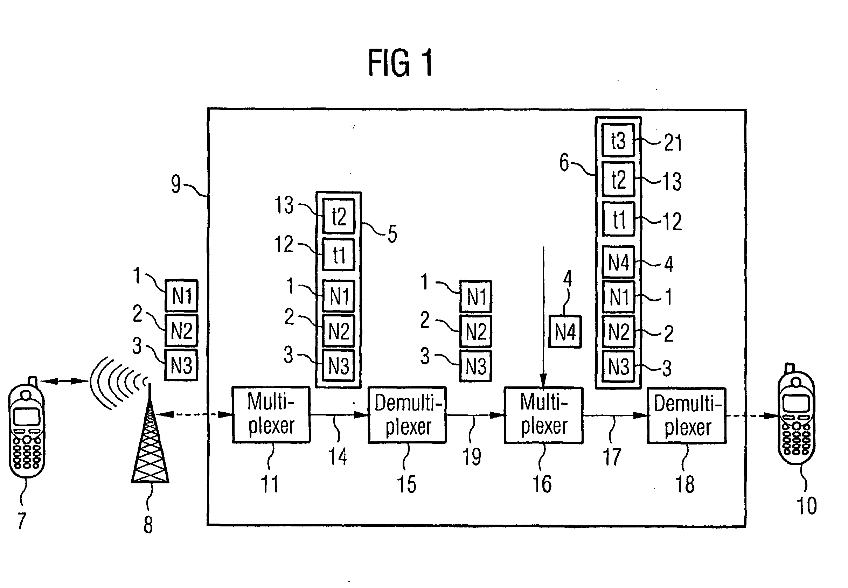

Fig. 1 zeigt die Übertragung von Nutzlastpaketen 1, 2, 3, 4 einzeln bzw. in Sammelpaketen 5, 6 von einer Mobilstation 7 über eine Empfangseinrichtung BTS 8 eines Mobilfunknetzes, und auf einem Weg durch ein paketvermitteltes (möglicherweise aus mehreren Teilnetzen bestehendes) Datennetz 9 zu einer anderen Mobilstation 10. Im Datennetz 9 werden auf seitens der Mobilstation 7 von mindestens einem Teilnehmer eingegebener Sprache basierende Sprachdaten 1, 2, 3 von einer Multiplexing-Einrichtung 11 in ein Sammelpaket 5 (= Multiplexingpaket) zusammengefasst, wobei im Sammelpaket 5 auch die zeitliche Verzögerung von Nutzdatenpaketen 1, 2, 3 relativ zueinander repräsentierende Zeiteinformationen 12, 13 enthalten sind, worauf das Sammelpaket 5 über einen Teil 14 des Weges der Nutzlastpakete 1, 2, 3 durch das Datennetz 9 übermittelt wird, worauf von einem ersten Demultiplexer 15 das Sammelpaket 5 empfangen und die im Sammelpaket 5 enthaltenen Nutzlastpakete wieder einzeln weiterbehandelt (einzeln weitergesendet/ in weiteren Sammelpaketen 6 zusammengefasst/ aus dem Netz ausgegeben) werden. Nach dem Demultiplexer 15 werden die Nutzlastpakete 1, 2 an einen Multiplexer 16 übergeben, welcher im vorliegendem Falle auch das auf einem Wegstück 16 des Datennetzes 9 in die gleiche Richtung zu übertragende Nutzlastpaket 4 empfängt und die Nutzlastpakete 1, 2, 3,4 über einen Teil des Weges 17 bis zu einem weiteren Demultiplexer 18 überträgt, welcher die im Sammelpaket 6 enthaltenen Nutzlastpakete 1,2,3,4 wieder demultiplext und beispielsweise an eine Mobilstation 10 weiterreicht.

In einem Multiplexer 11 wird der zeitliche Abstand eintreffender Pakete n1, n2, n3 relativ zueinander als Zeitinformation erfasst und als Zeitinformation 12, 13 im im Muliplexer erstellten Multiplexpaket 5 mitübertragen. In einem an einem Multiplexer eingehende Nutzlastpakete sammelnden Puffer ist vorzugsweise die maximale Zeitverzögerung vom Eingang eines Nutzlastpaketes bis zu seiner Weitersendung in einem Multiplexpaket maximal 2 ms.

In einem Demultiplexer 15 werden in einem beim Demultiplexer 15 eingehenden Sammelpaket 5 enthaltene Zeitinformationen 12, 13 verwendet, um bei einer Weitersendung von Nutzlastpaketen 1, 2, 3 vom Demultiplexer 15 (auf der Strecke 19) die Nutzlastpakete 1, 2, 3 relativ zueinander wieder so zeitlich zu verzögern, wie sie vor dem Multiplexer 11 relativ zueinander zeitlich verzögert waren. Beispielsweise kann die Zeitinformation 12 die Verzögerung des Nutzlastpaketes 2 gegenüber dem Nutzlastpaket 1 und die Zeitinformation 13 die Verzögerung des Nutzlastpaketes 3 gegenüber dem Nutzlastpaket 2 repräsentieren. Es kann auch zu jedem Nutzlastpaket eine Zeitinformation im Sammelpaket enthalten sein.

Ein Demultiplexer kann insbesondere an einem Knotenpunkt (Switch etc) in einem Datennetz oder zwischen Datennetzen angeordnet sein, an welchem Multiplexpakete und/ oder Nutzlastpakete aus mehreren Richtungen ankommen und/ oder in mehrere Richtungen weitergeleitet werden.

Durch die erfindungsgemässe Vermeidung von Jitter durch eine zeitliche Verzögerung (in einem Puffer) an jedem Demultiplexer nach einer Teilwegstrecke 14/17 im Datennetz 9 wird weniger Puffer benötigt, als benötigt würde bei einer Pufferung nur beim Ausgang aus dem Datennetz 9 und überdies eine wesentlich geringere zeitliche Verzögerung der Übertragung von Nuetzlastpaekten erzeugt.

Die Erfindung ist insbesondere für Mobilfunknetze geeignet, da bei vielen in Festnetzen üblichen Sprachkodierungen in der Regel das Problem der Notwendigkeit der Übertragung von Datenpaketen unterschiedliche Grösse und/oder Frequenz nicht auftritt.

Erfindungsgemäß kann auch nur ein Multiplexen/Übertragen/Demultiplexen (14) auf (mindestens) einem Teil. des Weges von Nutzlastpaketen durch ein Datennetz 9 erfolgen, ohne dass ein Demultiplexer am Ausgang 20 eines Datennetzes 9 vorgesehen werden muss.

## Patentansprüche

1. Verfahren zum Übertragen von Nutzlastpaketen (1, 2, 3, 4) in einem paketvermittelten Datennetz (9) Nutzlastpakete (1, 2, 3) auf ihrem Weg (14, 19, 17, 20) durch das Datennetz 9 mehrmals:
- in einem über einen Teil (14) des Weges zu übertragenem Sammelpaket (5) zusammengefasst (11) und
- nach Übertragung (14) des Sammelpaketes (5) über einen Teil (14) des Weges einzeln weiterbehandelt (15, 19, 16, 17, 18, 20) werden,
wobei in dem Sammelpaket (5) zu übertragende Zeitinformationen (12, 13) zur Wiederherstellung (15) der zeitlichen Verzögerung von den Nutzlastpaketen (1, 2, 3) relativ zueinander verwendet werden.

2. Verfahren nach Anspruch 1
**dadurch gekennzeichnet, dass**
in dem Sammelpaket (5) zu den darin enthaltenen Nutzlastpaketen (1, 2, 3) Zeitinformationen (12, 13) enthalten sind, die dem Zeitoffset zwischen dem Beginn des Aufbaues eines Sammelpaketes (5) und dem Zeitpunkt des Empfangs (11) des jeweiligen in das Sammelpaket (5) einzufügenden Nutzpaketes (1, 2, 3) repräsentiert.

3. Verfahren nach Anspruch 2
**dadurch gekennzeichnet, dass**
beim Demultiplexing (15) eines übertragenen Sammelpaketes (5) für eine einzelne Weiterbehandlung (19, 17, 20) von im Sammelpaket übertragenen Nutzlastpaketen eine weitere Übermittlung (19) eines Nutzlastpaketes (1, 2, 3) jeweils um eine dem Zeitoffset (12, 13) entsprechende Zeit gegenüber dem Empfang des Sammelpaketes (5) verzögert wird.

4. Verfahren nach einem der vorhergehenden Ansprüche,
**dadurch gekennzeichnet, dass**
im den Sammelpaket (5) zu jedem darin enthaltenen Nutzlastpaket (1, 2, 3) eine Zeitinformation (12, 13) enthalten ist, die angibt, wieviel Zeit zwischen dem Empfang oder der Erzeugung des Nutzlastpaketes (1,2,3 und dem Abschicken des Sammelpaketes (5) vergangen ist, wobei vorzugsweise die Zeitspanne zwischen dem Aufbau und dem Abschicken des Sammelpaketes in diesem übermittelt wird (12, 13) oder einem Empfänger (15) des Sammelpaketes (5) bekannt ist.

5. Verfahren nach einem der vorhergehenden Ansprüche
**dadurch gekennzeichnet, dass**
Nutzlastpakete (1, 2, 3) in dem Sammelpaket (5) entsprechend der Reihenfolge (1/2/3) ihres Empfangs dort (11) wo das Sammelpaket (5) aus ihnen (1,2,3) erstellt wird, abgespeichert werden.

6. Verfahren nach Anspruch 5
**dadurch gekennzeichnet, dass**
beim jeweils nur der Zeitoffset (12, 13) des als nächstes zu behandelnden Nutzlastpaketes eines Sammelpaketes (5) betrachtet wird und vorzugsweise mit der Weiterbehandlung von Nutzlastpaketen des Sammelpaketes erst dann fortgefahren wird, wenn der für das nächste Nutzlastpaket zutreffende Zeitpunkt erreicht ist.

7. Verfahren nach einem der vorhergehenden Ansprüche
**dadurch gekennzeichnet, dass**
die Weiterbehandlung einiger der Nutzlastpakete eine Weiterübermittlung in unterschiedlichen Sammelpaketen umfasst.

8. Verfahren nach einem der vorhergehenden Ansprüche,
**dadurch gekennzeichnet, dass**
das Datennetz ein RTP/UDP/IP-Datennetz ist.

9. Paketvermitteltes Datennetz (9), insbesondere zur Durchführung
des Verfahrens nach einen der vorhergehenden Ansprüche, zum Übertragen von Nützlastpaketen (1, 2, 3) entlang eines Weges (14, 19, 17, 20) durch das paketvermittelte Datennetz (9) mit mindestens
- einer ersten Multiplexeinrichtung (11) zum Verpacken mehrerer Nutzdatenpakete (1, 2, 3) in ein erstes Sammelpaket (5),
- einer Übertragungstrecke (14) zum Übertragen des Sammelpaketes (5) entlang eines ersten Teiles (14) eines Weges von den Nutzlastpaketen (1, 2, 3) durch das Datennetz (9) **gekennzeichnet durch**
- eine Demultiplexeinrichtung (15) zum Weiterbehandeln (19) von den menreren in einem Sammelpaket (5) enthaltenen Nutzlastpaketen (1, 2, 3),
- eine zweite Multiplexeinrichtung (16) zum Verpacken von in das Sammelpaket (5) verpackten (11) und wieder entpackten (15) Nutzlastpaketen (1, 2, 3) in ein weiteres Sammelpaket (6),
- eine Übertragungsstrecke (17) zum Übertragen des weiteren Sammelpaketes (6) über einen weiteren Teil (17) des Weges von den Nutzlastpaketen (1, 2, 3) **durch** das Datennetz (9),
- eine weitere Demultiplexeinrichtung (18) zum Weiterbehandeln der im weiterem Sammelpaket (6) enthaltenen Nutzdatenpakete (1, 2, 3, 4),
- wobei jede Multiplexeinrichtung (11, 16) eine Einrichtung zum Einfügen von die zeitlichen Verzögerung von den Nutzlastpaketen (1, 2, 3, 4) relativ zueinander vor der Multiplexeinrichtung repräsentierenden Zeitangaben in das Sammelpaket (5, 6) umfasst,
- wobei jede Demultiplexeinrichtung (15, 18) eine Verzögerungseinrichtung zum Verzögern der Absendung von in dem Sammelpaket (5, 6) enthaltenen Nutzlastpaketen relativ zueinander um eine **durch** die im Sammelpaket enthaltene Zeitangaben (12, 13, 21) definierte Zeit umfaßt.

## Claims

1. Method for transmitting payload packets (1, 2, 3, 4) in a packet-switched data network (9), **characterized in that** payload packets (1, 2, 3) on their path (14, 19, 17, 20) through the data network 9 are on more than one occasion:
- combined (11) to form a group packet (5) to be transmitted along a part (14) of the path and
- individually further processed (15, 19, 16, 17, 18, 20) after transmission (14) of group packet (5) along a part (14) of the path,
with time information (12, 13) to be transmitted in the group packet (5) being used to reestablish (15) the time delay of the payload packets (1, 2, 3) in relation to each other.

2. Method according to Claim 1,
**characterized in that**
time information (12, 13) is contained in the group packet (5) relating to the payload packets (1, 2, 3) contained therein, with such time information representing the time offset between the start of building a group packet (5) and the time of receipt (11) of the respective payload packet (1, 2, 3) to be added to the group packet (5).

3. Method according to Claim 2,
**characterized in that**
during the demultiplexing (15) of a transmitted group packet (5) for individual further processing (19, 17, 20) of payload packets transmitted in the group packet, a further transmission (19) of a payload packet (1, 2, 3) is in each case delayed by a time corresponding to the time offset (12, 13) in relation to the receipt of the group packet (5).

4. Method according to one of the preceding claims,
**characterized in that**
time information (12, 13) is contained in the group packet (5) re lating to each payload packet (1, 2, 3) contained therein, specifying how much time has elapsed between the receipt or generation of the payload packet (1, 2, 3) and the dispatch of the group packet (5), with the time span between the building and dispatch of the group packet preferably being transmitted therein (12, 13) or being known to a recipient (15) of the group packet (5).

5. Method according to one of the preceding claims,
**characterized in that**
payload packets (1, 2, 3) are stored in the group packet (5) according to the order (1/2/3) in which they are received where (11) the group packet (5) is created out of them (1, 2, 3).

6. Method according to Claim 5,
**characterized in that**
in each case only the time offset (12, 13) of the next payload packet of a group packet (5) to be processed is taken into consideration and the further processing of payload packets of the group packet is preferably not continued until the applicable point of time for the next payload packet has been reached.

7. Method according to one of the preceding claims,
**characterized in that**
the further processing of some of the payload packets involves a further transmission in different group packets.

8. Method according to one of the preceding claims,
**characterized in that**
the data network is an RTP/UDP/IP data network.

9. Packet switched data network, in particular for implementing the method according to one of the preceding claims, for transmitting payload packets (1, 2, 3) along a path (14, 19, 17, 20) through the packet-switched data network with at least
- a first multiplex device (11) for packing several payload packets (1, 2, 3) into a first group packet (5),
- a transmission section (14) for transmitting the group packet (5) along a first part (14) of a path of the payload packets (1, 2, 3) through the data network (9), **characterized by**
- a demultiplex device (15) for further processing (19) of the several payload packets (1, 2, 3) contained in one group packet (5),
- a second multiplex device (16) for packing payload packets (1, 2, 3) packed (11) into a group packet (5) and then unpacked again (15) into a further group packet (6),
- a transmission section (17) for transmitting the further group packet (6) along a further part (17) of the path of the payload packets (1, 2, 3) through the data network (9),
- a further demultiplex device (18) for further processing the payload packets (1, 2, 3, 4) contained in the further group packet (6),
- with each multiplex device (11, 16) comprising a device for adding to the group packet (5, 6) the time data representing the time delay of the payload packets in relation to each other before the multiplex device,
- with each demultiplex device (15, 18) comprising a delay device for delaying the dispatch of payload packets contained in the group packet (5, 6) in relation to each other by a time defined by the time data (12, 13, 21) contained in the group packet.

## Revendications

1. Procédé pour transmettre des paquets de charge utile (1, 2, 3, 4) dans un réseau de données à commutation de paquets (9) **caractérisé en ce que** les paquets de charge utile (1, 2, 3) sur leur trajet (14, 19, 17, 20) dans le réseau de données 9 :
- sont regroupés (11) plusieurs fois sur une partie (14) du trajet en un paquet groupé (5) à transmettre et
- sont traités individuellement (15, 19, 16, 17, 18, 20) plusieurs fois après la transmission (14) du paquet groupé (5) sur une partie (14) du trajet,
des informations de temps (12, 13) à transmettre dans le paquet groupé (5) étant utilisées relativement les unes par rapport aux autres pour la restauration (15) du retard de temps des paquets de charge utile (1, 2, 3).

2. Procédé selon la revendication 1
**caractérisé en ce que**
des informations de temps (12, 13) sont contenues dans le paquet groupé (5) pour les paquets de charge utile (1, 2, 3), ces informations représentant le décalage de temps entre le début de la constitution d'un paquet groupé (5) et le moment de réception (11) du paquet utile (1, 2, 3) respectif à insérer dans le paquet groupé (5).

3. Procédé selon la revendication 2
**caractérisé en ce que**
lors du démultiplexage (15) d'un paquet groupé (5) transmis pour un traitement ultérieur individuel (19, 17, 20) de paquets de charge utile transmis dans le paquet groupé, une transmission supplémentaire (19) d'un paquet de charge utile (1, 2, 3) est temporisée respectivement d'un temps correspondant au décalage de temps (12, 13) par rapport à la réception du paquet groupé (5).

4. Procédé selon l'une quelconque des revendications précédentes,
**caractérisé en ce que**
une information de temps (12, 13) est contenue dans le paquet groupé (5) pour chaque paquet de charge utile (1, 2, 3) qui y est contenu, cette information indiquant combien de temps s'est écouté entre la réception ou la création du paquet de charge utile (1, 2, 3) et l'envoi du paquet groupé (5), la période de temps entre la constitution et l'envoi du paquet groupé étant transmise de préférence dans celui-ci (12, 13) ou étant connue d'un récepteur (15) du paquet groupé (5).

5. Procédé selon l'une quelconque des revendications précédentes
**caractérisé en ce que**
des paquets de charge utile (1, 2, 3) sont mémorisés dans le paquet groupé (5) conformément à l'ordre (1/2/3) de leur réception là (11) où le paquet groupé (5) est créé à partir d'eux (1, 2, 3).

6. Procédé selon la revendication 5
**caractérisé en ce que**
seulement le décalage de temps (12, 13) du paquet de charge utile, à traiter comme suivant, d'un paquet groupé (5) est pris en considération et **en ce que** le traitement ultérieur des paquets de charge utile du paquet groupé n'est poursuivi de préférence que lorsque le moment concernant le paquet de charge utile suivant est atteint.

7. Procédé selon l'une quelconque des revendications précédentes
**caractérisé en ce que**
le traitement ultérieur de quelques-uns des paquets de charge utile comprend une transmission dans différents paquets groupés.

8. Procédé selon l'une quelconque des revendications précédentes
**caractérisé en ce que**
le réseau de données est un réseau de données RTP/UDP/IP.

9. Réseau de données (9) à commutation de paquets, notamment pour la réalisation du procédé selon l'une quelconque des revendications précédentes, pour transmettre des paquets de charge utile (1, 2, 3) le long d'un trajet (14, 19, 17, 20) dans le réseau de données (9) à commutation de paquets, comprenant au moins
- un premier dispositif de multiplexage (11) pour assembler plusieurs paquets de charge utile (1, 2, 3) dans un premier paquet groupé (5),
- un trajet de transmission (14) pour transmettre le paquet groupé (5) le long d'une première partie (14) d'un trajet des paquets de charge utile (1, 2, 3) dans le réseau de données (9), **caractérisé par**
- un dispositif de démultiplexage (15) pour le traitement ultérieur (19) des plusieurs paquets de charge utile (1, 2, 3) contenus dans un paquet groupé (5),
- un deuxième dispositif de multiplexage (16) pour assembler des paquets de charge utile (1, 2, 3) assemblés (11) dans le paquet groupé (5) et à nouveau désassemblés (15), dans un autre paquet groupé (6),
- un trajet de transmission (17) pour la transmission de l'autre paquet groupé (6) dans le réseau de données (9) sur une autre partie (17) du trajet des paquets de charge utile (1, 2, 3),
un autre dispositif de démultiplexage (18) pour le traitement ultérieur des paquets de données utiles (1,2, 3, 4) contenus dans l'autre paquet groupé (6),
- où chaque dispositif de multiplexage (11, 16) comprend un dispositif pour insérer dans le paquet groupé (5, 6) des indications de temps représentant la temporisation des paquets de charge utile (1, 2, 3, 4) relativement les uns par rapport aux autres en amont du dispositif de multiplexage,
- où chaque dispositif de démultiplexage (15, 18) comprend un dispositif de temporisation pour retarder l'émission des paquets de charge utile, contenus dans le paquet groupé (5, 6), relativement les uns par rapport aux autres, d'un temps défini par les indications de temps (12, 13, 21) contenues dans le paquet groupé.
